# EUROPÄISCHE PATENTSCHRIFT

(11) **EP 1 385 071 B1**
(45) Veröffentlichungstag und Bekanntmachung des Hinweises auf die Patenterteilung: **16.12.2009**
(21) Anmeldenummer: 03017030.2
(22) Anmeldetag: 28.07.2003
(51) Int. Cl.: G05B 19/418, B25J 9/16

(54) **Verfahren zum Austausch von Daten zwischen Steuerungen von Maschinen, insbesondere von Robotern**
Method for exchanging data between machine controllers, specially robot controllers
Procédé d'échange de données entre commande de machines, en particulier entre commandes de robots

(30) Priorität: 27.07.2002 DE 10234233
(43) Veröffentlichungstag der Anmeldung: 28.01.2004
(73) Patentinhaber: KUKA Roboter GmbH, 86165 Augsburg (DE)
(72) Erfinder: Graf, Stefan, 86637 Zusamaltheim (DE); Chaffee, Michael, Gaines, MI 48436 (US)
(74) Vertreter: Lempert, Jost

(56) Entgegenhaltungen:
- EP-A2- 0 560 226
- EP-A2- 1 186 386
- DE-A1- 10 055 066
- US-A- 5 204 942
- HIRAISHI H ET AL: "Web-based communication and control for multiagent robots" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, Bd. 1, 13. Oktober 1998 (1998-10-13), Seiten 120-125, XP010311311 ISBN: 0-7803-4465-0
- OZAKI ET AL: "Communication system for cooperative mobile robots-implementation of communication among soccer robots" Advanced Robotics VSP Netherlands, Bd. 13, Nr. 3, 31. Dezember 1999 (1999-12-31), Seiten 287-288, XP008078651 ISSN: 0169-1864
- ASAMA H ET AL: "Collision avoidance among multiple mobile robots based on rules and communication" INTELLIGENT ROBOTS AND SYSTEMS '91. 'INTELLIGENCE FOR MECHANICAL SYSTEMS, PROCEEDINGS IROS '91. IEEE/RSJ INTERNATIONAL WORKSHOP ON OSAKA, JAPAN 3-5 NOV. 1991, NEW YORK, NY, USA,IEEE, US, 3. November 1991 (1991-11-03), Seiten 1215-1220, XP010047354 ISBN: 0-7803-0067-X
- LANE J C ET AL: "Reconfigurable control station design for robotic operations" SYSTEMS, MAN, AND CYBERNETICS, 1997. COMPUTATIONAL CYBERNETICS AND SIMULATION., 1997 IEEE INTERNATIONAL CONFERENCE ON ORLANDO, FL, USA 12-15 OCT. 1997, NEW YORK, NY, USA,IEEE, US, Bd. 4, 12. Oktober 1997 (1997-10-12), Seiten 3722-3727, XP010249178 ISBN: 0-7803-4053-1
- TURRO N ET AL: "Haptically augmented teleoperation" 21. Mai 2001 (2001-05-21), PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY : IEEE, US, PAGE(S) 386-392 , XP010550181 ISBN: 0-7803-6576-3 Absätze 1 und 3.1-3.3

## Beschreibung

Die Erfindung betrifft ein Verfahren zum Austausch von Daten zwischen Steuerungen von Maschinen, insbesondere von Robotern.

Die Übertragung von Daten zwischen Steuerungen von Maschinen erfolgt derzeit nur über direkte Verbindungen, sei es in Form direkt verdrahteter Ein- und Ausgänge oder über Feldbussysteme zur Datenübertragung, während Befehle derart nicht übertragbar sind. Befehlsangaben müssen über Bedienerelemente oder einen Zentralrechner erfolgen. Dabei werden die entsprechenden Daten als solche zwischen den beiden Steuerungen direkt übertragen.

Die bisherige Technik ist umständlich, da die physikalischen Ein-/Ausgänge oder das Feldbussystem zur Verfügung zu stellen sind. Es muss eine Übereinstimmung auf beiden Steuerungen hergestellt werden, damit die jeweiligen Ein-/Ausgänge die gleiche Bedeutungen besitzen. Da die Steuerungen üblicherweise nicht direkt via Feldbus kommunizieren, sondern über eine zwischengeschaltete Anlagen-SPS (speicherprogrammierte Steuerung), muss in dieser SPS ein 1:1 Mapping der Ein-/Ausgänge berücksichtigt werden. Soll die Kommunikation zwischen den Steuerungen erweitert werden, so beinhaltet dies eine Änderung der Steuerungsprogramme der Ein- und Ausgabekonfiguration (zusätzliche Feldbus-Worte, zusätzliche Leitungen bei physikalischen Ein-/Ausgängen, zusätzlicher Programmieraufwand auf der SPS-Seite).

Die Druckschrift "H. Asama et al.", Proceedings of IEEE/RSJ, International Workshop on Intelligent Robots and Systems I ROS (1991), Seiten 1215-1220 beschreibt ein Verfahren zum Austausch von Daten zwischen Steuerungen von Maschinen ("laptop computers" und Servoelektronik bei "mobile robots" wobei eine erste Steuerung eine zu übertragende Anwei sung mit an eine zweite Steuerung zu versendenden Daten und mit einer diese zweite Steuerung repräsentierenden Kennung erzeugt, wobei die zu übertragende Anweisung mit einer Kennung der ersten Steuerung versehen wird, die erste Steuerung die zu übertragende Anweisung an die zweite Steuerung sendet, wobei die zweite Steuerung die Daten der Anweisung auswertet und die zweite Steuerung der ersten Steuerung eine Rückmeldung gibt.

Der Erfindung liegt die Aufgabe zugrunde, die genannten Nachteile zu überwinden und insbesondere eine Vereinfachung sowie eine einfache Erweiterbarkeit der Kommunikation zwischen zwei oder mehreren Steuerungen zu ermöglichen, wobei fehlerträchtige Zwischenschichten weitgehend ausgeschaltet werden sollen.

Erfindungsgemäß wird die genannte Aufgabe mit einem Verfahren der eingangs genannten Art gelöst, wobei eine erste Steuerung eine zu übertragende Anweisung mit an eine zweite Steuerung zu versendenden Daten und mit einer diese zweite Steuerung repräsentierenden Kennung erzeugt, die zu übertragende Anweisung mit einer Kennung der ersten Steuerung versehen wird, die erste Steuerung die zu übertragenden Anweisung an die zweite Steuerung sendet, wobei die zweite Steuerung die Daten der Anweisung auswertet und die zweite Steuerung der ersten Steuerung eine Rückmeldung gibt, dadurch gekennzeichnet, dass die zweite Steuerung die empfangenen Daten in einen internen Code kompiliert.

Die Erfindung sieht eine einzeilige Anweisung vor, die neben den eigentlichen zu übertragenden Daten (physikalische Zustände und/oder Steuerungsbefehle) eine Kennung der Empfänger-Steuerung beinhaltet. Hierdurch wird eine einfache Erweiterbarkeit der Kommunikation durch frei programmierbare Befehle als Parameter der Steuerungsanweisung (String-Befehle) geschaffen, wodurch auch eine erhöhte Transparenz im Anwenderprogramm durch die Verwendung frei programmierbarer Befehle als Parameter der Anweisungen und damit die Verwendung entsprechender Namen für die Befehle statt I/A-Bezeichnungen möglich ist. Durch die Erfindung wird die Erweiterbarkeit sehr einfach, da lediglich eine neue globale Variable deklariert werden muss, die dann auf der Empfängersteuerung verwendet werden kann, da diese eine beliebige globale Variable manipulieren kann. Die Erweiterbarkeit wird nicht durch Hardware-Resourcen begrenzt. Neben Daten, also insbesondere physikalische Zustände, können so auch Befehle übertragen werden. Durch die Erfindung kann die Daten- und Befehlsübertragung flexibel und ohne Hardund Software-Aufwand bei Austausch von Robotern zu Robotern ohne Festlegung einer Hierarchie erfolgen, was eine Voraussetzung für die unmittelbare Kooperation an sich gleichberechtigter Roboter ist. Ein weiterer Vorteil liegt darin, dass die Übertragung synchron erfolgt, so dass der Initiator der Übertragung eine direkte Rückmeldung über den Erfolg der Aktion bekommt, und erst dann weiterarbeiten kann, wenn der Befehl auf der Gegenseite ausgeführt wurde. Durch die Erfindung können mit einer Wertzuweisung nicht nur einfach Daten übertragen werden, sondern auch ganz gezielt Systemzustände manipuliert werden, wie das Erzwingen einer Step-Betriebsart oder die Durchführung einer Satzanwahl im anderen Programm.

In bevorzugter Weiterentwicklung der Erfindung ist vorgesehen, dass der zu übertragende Befehl als UDP-Meldung formatiert wird, wobei insbesondere die Rückmeldung der zweiten Steuerung auch als UDP-Meldung formatiert wird. Schließlich ist erfindungsgemäß vorgesehen, dass die erste Steuerung erst eine zu übertragende Anweisung an eine weitere Steuerung übersendet, wenn sie von dieser eine Rückmeldung enthalten hat, dass die zweite Steuerung zur Ausführung einer Anweisung bereit ist. Weiterhin kann die zu übertragende Anweisung sowohl die Kennung der angesprochenen Steuerung als auch die zu übertragenden Daten als Konstante oder Variable beinhalten.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine schematische Darstellung mehrer miteinander kooperierender Steuerungen;
- Fig. 2: der grundsätzliche Ablauf des erfindungsgemäßen Verfahrens zum Austausch von Daten zwischen zwei Steuerungen; und
- Fig. 3: eine genauere Darstellung der Bearbeitung der zwischen Steuerungen auszutauschenden Daten in letzterem.

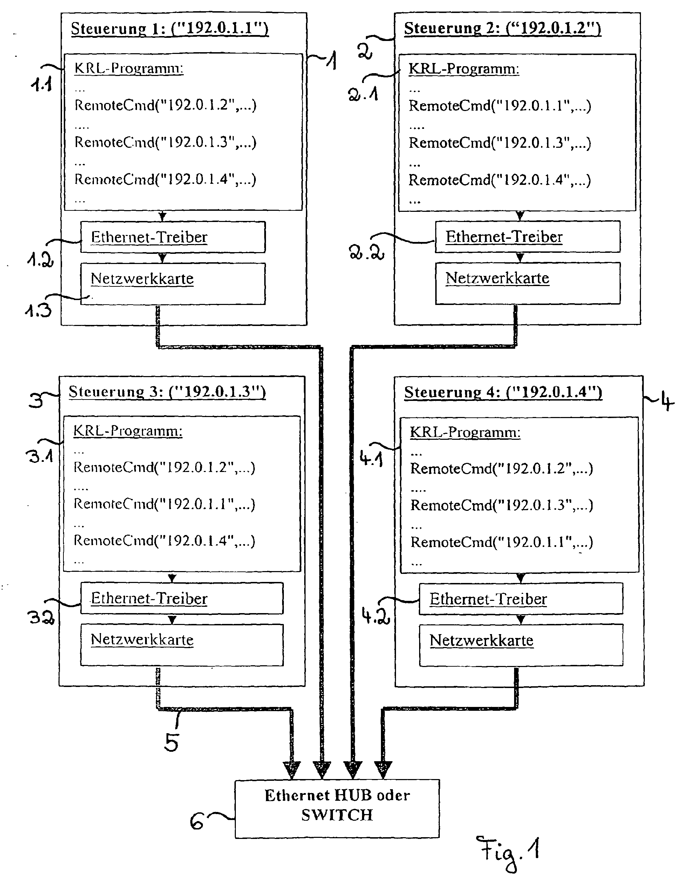

Die Figur 1 zeigt beispielhaft vier miteinander kooperierende Steuerungen 1 bis 4, denen jeweils eine eindeutige Adresse, IP="192.0.1.1" für die Steuerung 1, zugeordnet ist. Jede Steuerung 1 bis 4 beinhaltet einen Rechner 1.1, auf dem ein Steuerungsprogramm für eine Maschine, insbesondere für einen von der jeweiligen Steuerung gesteuerten Roboter abläuft. Darüber hinaus beinhaltet jede Steuerung einen Ethernet-Treiber 1.2 bis 4.2 sowie eine Netzwerkkarte 1.3 bis 4.3 zur Kommunikation mit einem Netzwerk 5, über welches die Steuerungen 1 bis 4 direkt oder über einen Switch miteinander verbunden sind. Nicht dargestellt sind in einer Steuerung enthaltene Speicher, wie Festwertspeicher, flüchtige Speicher etc. sowie Peripheriegeräte, wie insbesondere Ein- und Ausgabegeräte.

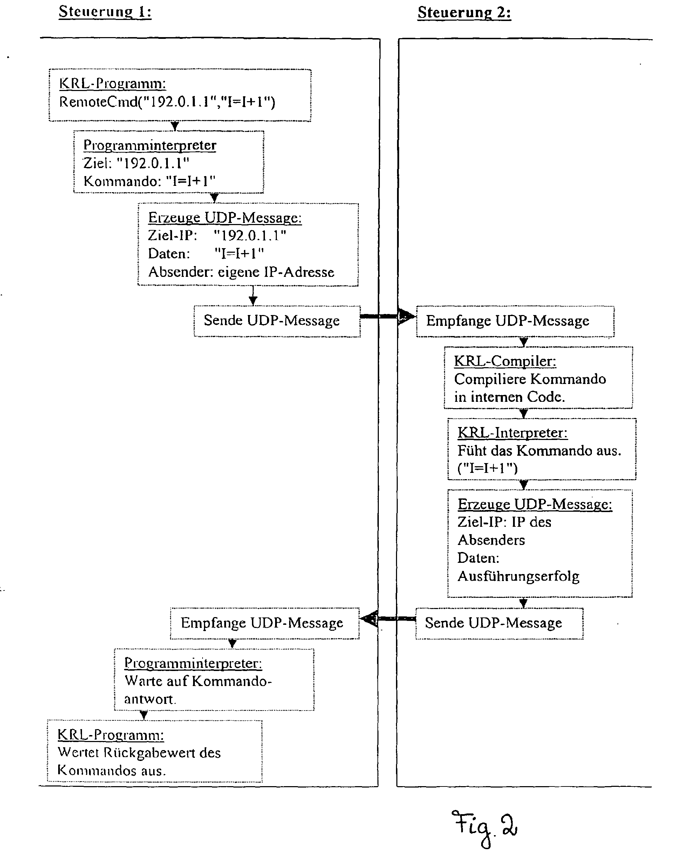

Zum Datenaustausch zwischen zwei Steuerungen 1 und 2 erzeugt zunächst ein auf der ersten Steuerung laufendes Steuerungsprogramm eine zu übertragende Anweisung, die einerseits die zu übertragenden Daten, wie physikalische Parameter des der ersten Steuerung zugeordneten Roboters oder aber auch Anweisungen zur Veränderung physikalischer Parameter bei einem der zweiten Steuerung zugeordneten Roboter beinhaltet. Die zu übertragende Anweisung beinhaltet darüber hinaus die Adresse der Steuerung, an die die durch das auf dem ersten Rechner laufende Programm erzeugten Daten oder Anweisungen zu übertragen sind. Weiterhin wird diese Anweisung mit der Absender-eigenen Adresse versehen. Diese Meldung wird dann als UDP-Meldung über das Netzwerk an die zweite Steuerung übertragen (Figur 2). Diese empfängt die UDP-Meldung und kompiliert den Befehl in einen internen Steuerungscode. Im dargestellten Ausführungsbeispiel der Figur 2 führt der Interpreter der in der Steuerung 2 laufenden Steuerungs-Software den ihm übertragenen Befehl, nämlich gemäß: I=I+1 die physikalische Größe I um einen Wert "1" zu erhöhen, aus. Anschließend erzeugt die Steuerung 2 eine Rückmelde-Nachricht, die einerseits die Adresse der ersten Steuerung und andererseits eine Aussage über den Ausführungserfolg der erhaltenen und ausgeführten Anweisung enthält. Diese Meldung wird als UDP-Meldung von der Steuerung 2 an die Steuerung 1 rückübersandt, deren Interpreter auf diese Befehl-Antwort wartet, von der ersten Steuerung empfangen und durch das Steuerungsprogramm der ersten Steuerung ausgewertet, wobei aufgrund der Auswertung dann gegebenenfalls weitere Anweisungen seitens der ersten an die zweite Steuerung gesendet werden.

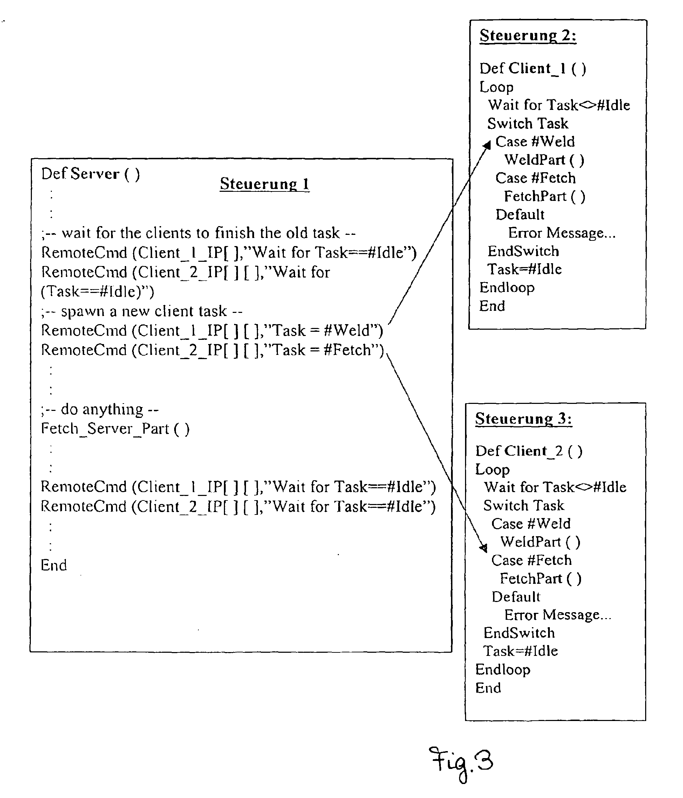

In diesem wie auch im Beispiel der Figur 3 arbeitet die Steuerung 1 als Server, während die Steuerung 2 (bzw. auch die Steuerung 3) als Client arbeitet. Zuordnungen sind nicht festgelegt, können vielmehr je nach auszuführende Arbeiten auch verändert werden.

Bevor die Steuerung 1 einen Befehl an eine andere Steuerung, in der Figur 3 die Steuerung 2 und/oder 3 gibt, wartet die Steuerung 1 zunächst darauf, dass die Steuerungen 2 und 3 ihre Arbeiten, gegebenenfalls aufgrund eines Fernsteuerungs-Befehls, ausführen und eine entsprechende Rückmeldung geben, wie dies unter Bezugnahme auf die Figur 2 erläutert wurde. Anschließend wird den Steuerungen eine neue Befehlsfolge übertragen, nämlich zu Schweißen (weld) und ein Teil zu greifen (fetch).

Weitere Fernsteuerungsbefehle können folgen. Anschließend wartet die Steuerung wiederum darauf, dass die Steuerungen 2 und 3 (Clients 1 und 2) eine Rückmeldung über die Ausführung der übertragenen Antworten geben.

Die Steuerungen 2.und 3 (Clients 1 und 2) warten ihrerseits auf eine Aufgabe, führen die empfangenen Befehle (Schweißen, Greifen) aus und kehren wieder in den Ruheund Wartezustand zurück.

Die Adresse der jeweiligen Steuerung kann als Konstante (z.B. RemoteCmd ("192.0.1.3", ...)) oder als Variable eingesetzt werden (z.B.IP[]="192.0.1.2"→RemoteCmd(IP[],...)). Gleiches gilt für die zu übertragenden Daten, die ebenfalls als Konstante (RemoteCmd(...,"MyVar=44")) bzw. Variable (CmdString[]="MyVar=055", RemoteCmd(..., CmdString[])) voll eingesetzt werden können.

Übliche Befehls sind die Anwahl eines Programms auf der angesprochenen Steuerung (RUNProgName()), das Zurücksetzen eines Programms (RESET), die Abwahl eines Programms (CANCEL) sowie die Zuweisung eines Wertes an eine globale Variable (Wertzuweisung) als einfache Werte, Strings oder boolsche Werte oder auch in Form von komplexen Zuweisungen, wie Summen, Kleiner-Größer-Abschätzungen sowie komplexen Funktionen. Schließlich beinhaltet ein weiteres mögliches Befehl das Abwarten eines bestimmten Systemzustandes bei der angesteuerten Steuerung, wie beispielsweise der Wert eines Eingangs 1 gleich dem eines Eingangs 2 wird: RemoteCmd(IP[],"Wait for$IN[1]==$IN[2]").

### Bezugszeichenliste

- 1-4: Steuerungen
- 1.1: Rechner
- 1.2-4.2: Ethernet-Treiber
- 1.3-4.3: Netzwerkkarte
- 5: Netzwerk

## Patentansprüche

1. Verfahren zum Austausch von Daten zwischen Steuerungen von Maschinen, insbesondere von Robotern, wobei eine erste Steuerung eine zu übertragende Anweisung mit an eine zweite Steuerung zu versendenden Daten und mit einer diese zweite Steuerung repräsentierenden Kennung erzeugt, die zu übertragende Anweisung mit einer Kennung der ersten Steuerung versehen wird, die erste Steuerung die zu übertragenden Anweisung an die zweite Steuerung sendet, wobei die zweite Steuerung die Daten der Anweisung auswertet und dass die zweite Steuerung der ersten Steuerung eine Rückmeldung gibt, **dadurch gekennzeichnet, dass** die zweite Steuerung die empfangenen Daten in einen internen Code kompiliert.

2. Verfahren nach Anspruch 1, **dadurch gekennzeichnet, dass** die zu übertragende Anweisung als UDP-Meldung formatiert wird.

3. Verfahren nach Anspruch 1 oder 2, **dadurch gekennzeichnet, dass** die Rückmeldung der zweiten Steuerung als UDP-Meldung formatiert wird.

4. Verfahren nach einem der vorangehenden Ansprüche, **dadurch gekennzeichnet, dass**, wenn die übertragenen Daten einen Steuerungsbefehl enthalten, die zweite Steuerung diesen ausführt.

5. Verfahren nach einem der vorangehenden Ansprüche, **dadurch gekennzeichnet, dass** die erste Steuerung erst eine zu übertragende Anweisung an eine weitere Steuerung übersendet, wenn sie von dieser eine Rückmeldung enthalten hat, dass die zweite Steuerung zur Ausführung einer Anweisung bereit ist.

6. Verfahren nach einem der vorangehenden Ansprüche, **dadurch gekennzeichnet, dass** die zu übertragende Anweisung sowohl die Kennung der angesprochenen Steuerung als auch die zu übertragenden Daten als Konstante oder Variable beinhalten kann.

7. Verfahren nach einem der vorangehenden Ansprüche, **gekennzeichnet durch** Befehle zur Anwahl eines Programms auf der zweiten Steuerung (RUNProgName ()), Zurücksetzen eines Programms der zweiten Steuerung (RESET), Abwahl eines Programms der zweiten Steuerung (CANCEL), Wertzuweisungen und/oder Befehle zum Warten auf Boolsche Werte.

## Claims

1. A method for the exchange of data between controls of machines, particularly robots, wherein a first control produces an instruction to be transmitted with data to be sent to a second control and with an identification representing said second control, the instruction to be transmitted is provided with an identification of the first control, the first control sends the instruction to be transmitted to the second control, wherein the second control evaluates the data of the instruction and the second control provides the first control with an acknowledgement, wherein the second control compiles the data received to an internal code.

2. The method according to claim 1, wherein the instruction to be transmitted is formatted as a UDP message.

3. The method according to claim 1 or 2, wherein the acknowledgement of the second control is formatted as a UDP message.

4. The method according to claim 1, wherein, if the data to be transmitted contain a control command, the second control executes the same.

5. The method according to claim 1, wherein the first control only transmits an instruction to be transmitted to a further control if it has received from the latter an acknowledgement to the effect that the second control is ready to perform an instruction.

6. The method according to claim 1, wherein the instruction to be transmitted can contain both the identification of the control in question and also the data to be transmitted as a constant or variable.

7. The method according to claim 1, wherein there are commands for the selection of a program on the second control (RUNProgName ()), resetting a program of the second control (RESET), cancellation of a program of the second control (CANCEL), value allocations and/or commands for waiting on Boolean values.

## Revendications

1. Procédé d'échange de données entre des systèmes de commande et des machines, notamment des robots, un premier système de commande envoyant une consigne à transmettre avec des données à envoyer à un deuxième système de commande et avec un identifient représentant ce deuxième système de commande, la consigne transmise étant dotée d'un identifiant caractérisant le premier système de commande, le premier système de commande envoyant la consigne à transmettre au deuxième système de commande, le deuxième système de commande analysant les données de la consigne et le deuxième système de commande renvoyant au premier système de commande un message de retour, **caractérisé en ce que** le deuxième système de commande compile les données reçues selon un code interne.

2. Procédé selon la revendication 1, **caractérisé en ce que** la consigne à transmettre est formatée sous la forme d'un message UDP.

3. Procédé selon la revendication 1 ou 2, **caractérisé en ce que** le message de retour du deuxième système de commande est formaté sous la forme d'un message UDP.

4. Procédé selon l'une quelconque des revendications précédentes, **caractérisé en ce que** lorsque les données transmises contiennent une commande d'un système de commande, le deuxième système de commande l'exécute.

5. Procédé selon l'une quelconque des revendications précédentes, **caractérisé en ce que** le premier système de commande envoie d'abord une consigne à transmettre à un autre système de commande lorsque celle-ci contient un message de retour, que le deuxième système de commande est prêt à exécuter une consigne.

6. Procédé selon l'une quelconque des revendications précédentes, **caractérisé en ce que** la consigne à transmettre peut contenir l'identifiant du système de commande concerné ainsi que les données à transmettre sous la forme d'une constante ou d'une variable.

7. Procédé selon l'une quelconque des revendications précédentes, **caractérisé par** les commandes de sélection d'un programme du deuxième système de commande (RUNProgName ()), la réinitialisation d'un programme du deuxième système de commande (RESET), l'annulation d'un programme du deuxième système de commande (CANCEL), les assignations de valeur et/ou les commandes détectant des valeurs booléennes.
